# FASCICULE DE BREVET EUROPEEN

(11) **EP 1 941 819 B1**
(45) Date de publication et mention de la délivrance du brevet: **25.08.2010**
(21) Numéro de dépôt: 07291048.2
(22) Date de dépôt: 30.08.2007
(51) Int. Cl.: A47J 37/12

(54) **Appareil de cuisson**
Kochgerät
Cooking appliance

(30) Priorité: 01.09.2006 FR 0607704
(43) Date de publication de la demande: 09.07.2008
(73) Titulaire: SEB SA, 69130 Ecully (FR)
(72) Inventeur: Lagrange, Valérie, 74150 Rumillly (FR); Gouthiere, Christophe, 74150 Rumilly (FR)
(74) Mandataire: Lemoine, Jean-Sébastien

(56) Documents cités:
- EP-A1- 1 426 003
- FR-A- 1 533 449
- FR-A1- 2 871 043
- US-A1- 2 952 764

## Description

L'invention concerne un appareil de cuisson ayant une ouverture supérieure permettant la manipulation des aliments en cours de cuisson, tel qu'un appareil à fondue.

De façon classique, un appareil de cuisson du type précité comprend une base, un récipient de cuisson qui reçoit les aliments à cuire et qui repose sur la base et une jupe qui est amovible de la base et qui comporte une paroi latérale fermée ceinturant le récipient de cuisson et s'étendant verticalement de la base jusqu'au moins l'extrémité libre supérieure de la paroi latérale du récipient de cuisson. Un appareil de ce type est décrit dans EP 1426003A.

En cours d'utilisation, il n'est pas rare qu'un utilisateur voulant manipuler un aliment en cours de cuisson vienne en contact avec la partie haute de l'appareil de cuisson, notamment les parois latérales du récipient, et s'y brûle. Et cet inconvénient est d'autant plus important que la nature du matériau utilisé pour la fabrication du récipient est en général bon conducteur de chaleur.

La présente invention vise à réaliser un appareil de cuisson selon la revendication 1, permettant de très fortement limiter (voire d'annuler) les risques de brûlures en cas de contact avec la partie haute.

Selon l'invention, le récipient de cuisson est amovible de la base et la paroi latérale de la jupe, d'une part, comprend des moyens de verrouillage qui sont adaptés à coopérer avec des moyens complémentaires de verrouillage portés par la base de façon à permettre la fixation libérable de la jupe à la base, et, d'autre part, porte une paroi annulaire comportant des moyens d'immobilisation qui coopèrent avec des moyens complémentaires d'immobilisation de façon à permettre l'immobilisation du récipient de cuisson dans la direction verticale quand la jupe est fixée à la base et le récipient est correctement placé sur la base.

De ce fait, quand il vient manipuler les aliments, l'utilisateur ne vient plus en contact avec le récipient mais avec la jupe, et de ce fait, il ne se brûle plus (ou du moins la brûlure est beaucoup moins douloureuse). Et plus la matière dans laquelle est réalisée la jupe est mauvaise conductrice de chaleur, moins la brûlure est grave.

D'autres particularités et avantages apparaîtront dans la description du mode de réalisation donné à titre d'exemple non limitatif et illustré dans les dessins annexés dans lesquels :

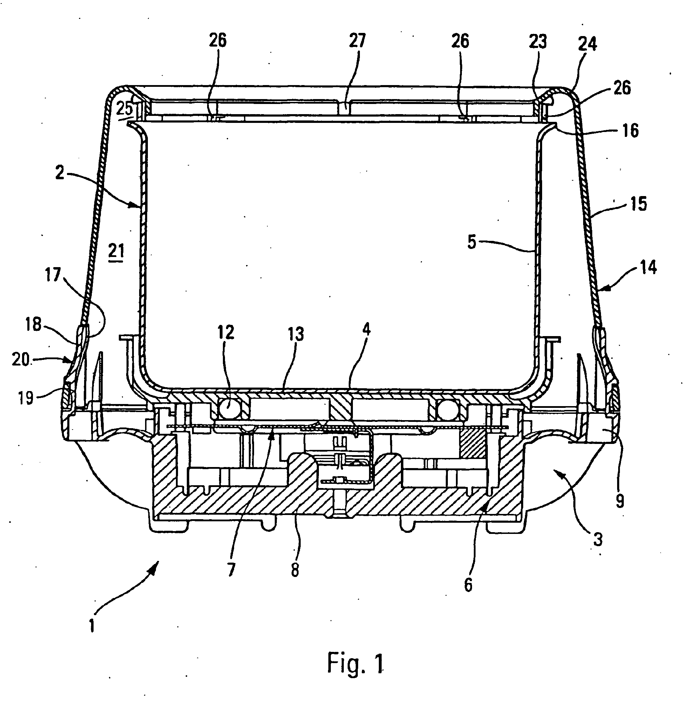

La figure 1 représente en coupe un appareil à fondue conforme à ce mode de réalisation de l'invention ; et

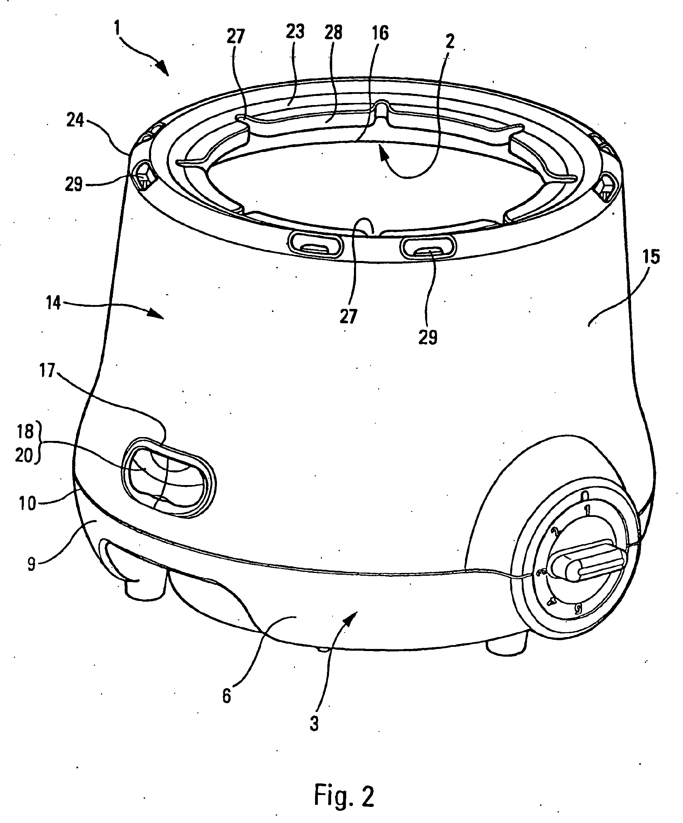

La figure 2 représente le même appareil à fondue en perspective.

Comme on peut le voir aux figures, un appareil de cuisson 1 (en l'occurrence, un appareil à fondue 1) comprend un récipient de cuisson 2 (en l'occurrence un caquelon 2) pour la cuisson d'aliments, et une base 3 adaptée à fournir au récipient de cuisson 2 l'énergie thermique nécessaire pour la cuisson des aliments. L'appareil de cuisson 1 possède une ouverture supérieure permettant la manipulation des aliments en cours de cuisson.

Le récipient de cuisson 2 repose sur la base 3 et il en est séparable. Le caquelon 2 est réalisé en métal et, comme tout récipient de cuisson 2, il comprend une paroi de fond 4 (ici une paroi pleine, c'est-à-dire sans ouverture) qui repose sur la base 3 et une paroi latérale 5 fermée (et ici pleine) qui s'étend verticalement vers le haut depuis la paroi de fond 4.

La base 3 comprend un socle 6 et un dispositif électrique de chauffe 7 disposé dans le socle 6.

Dans le présent mode de réalisation, le socle 6 (ici, en matière plastique) comprend une paroi de fond 8 par laquelle l'appareil de cuisson 1 peut prendre appui sur une surface de travail, et une paroi latérale 9 fermée qui s'étend vers le haut depuis la paroi de fond 8 et dont l'extrémité libre supérieure 10 définit une ouverture supérieure.

Le dispositif électrique de chauffe 7 comprend une résistance électrique de chauffe 12, et une plaque de chauffe 13 disposée au-dessus de la résistance électrique de chauffe 12 et sur laquelle le caquelon 2 repose directement. Le dispositif électrique de chauffe 7 comprend également un système d'alimentation et de contrôle de l'alimentation électrique de la résistance électrique de chauffe 12. Dans le présent mode de réalisation, le dispositif électrique de chauffe 7 est disposé dans le socle 6 de sorte que la plaque de chauffe 13 soit sensiblement au niveau de l'ouverture supérieure du socle 6.

Afin de protéger les utilisateurs contre d'éventuelles brûlures suite à une contact avec le caquelon 2, l'appareil à fondue 1 comprend également une jupe 14 (ici, en matière plastique) ceinturant le caquelon 2 (et donc la paroi latérale 5 de ce dernier) et formant ainsi une protection thermique. La jupe 14 comporte une paroi latérale 15 fermée qui s'étend verticalement depuis la base 3 (plus précisément, depuis le socle 6) jusqu'au-delà de l'extrémité libre supérieure 16 de la paroi latérale 5 du caquelon 2. De ce fait la protection thermique est optimale, aucune partie de la surface extérieure du caquelon 2 étant accessible.

La jupe 14 est amovible de la base 3 (plus exactement, du socle 6) et est adaptée à être y être fixée. Cette fonctionnalité permet notamment de pouvoir très facilement nettoyer l'appareil à fondue 1, la jupe 14 et le caquelon 2 qui sont libres de tout composant électrique, pouvant alors être séparés de la base 3 (de façon aisée, par l'utilisateur) et nettoyés à grandes eaux (par exemple, par un lave-vaisselle).

La paroi latérale 15 de la jupe 14 comprend des moyens de verrouillage 17 qui sont adaptés à coopérer avec des moyens complémentaires de verrouillage 18 portés par la base 3 (ici, par la paroi latérale 9 du socle 6) de façon à permettre la fixation libérable (de façon aisée, par l'utilisateur) de la jupe 14 à la base 3 (ici, par encliquetage) et donc, afin de sécuriser l'appareil à fondue 1.

De façon plus précise, les moyens complémentaires de verrouillage 18 (ici, des crochets 18 portées par des pattes 19 élastiquement déformables portées par la paroi latérale 9 du socle 6 au-delà de l'ouverture supérieure) sont mobiles entre une position de verrouillage dans laquelle ils sont emprisonnés dans les moyens de verrouillage 17 (ici, des ouvertures 17 traversant la paroi latérale 15 de la jupe 14) et une position de libération dans laquelle ils sont libérés des moyens de verrouillage 17. Par ailleurs, les moyens complémentaires de verrouillage 18 sont sollicités dans leur position de verrouillage (ici, du fait de l'élasticité naturelle des pattes 19). Dans le présent mode de réalisation, quand la jupe 14 est correctement fixée à la base 3, sa paroi latérale 15 enveloppe les pattes 19, seuls les crochets 18 étant accessibles via les ouvertures 17.

Afin de permettre le déplacement des moyens complémentaires de verrouillage 18 vers leur position de libération (à l'encontre de l'élasticité des pattes 19), la base 3 (ici, le socle 6) comprend des moyens de déverrouillage 20. Dans le présent mode de réalisation, ces moyens de déverrouillage 20 sont solidaires des moyens complémentaires de verrouillage 18, et, plus précisément, ils sont formés par la surface extérieure 20 de chaque crochet 18 qui traverse l'ouverture 17 correspondante et qui, de ce fait, est accessible.

Par ailleurs, afin d'éviter toute surchauffe de la jupe 14 du fait de la présence proche du caquelon 2, l'appareil à fondue 1 est conformé de sorte qu'il existe un espace sensiblement annulaire 21 entre la paroi latérale 5 du caquelon 2 et celle 15 de la jupe 14. Cet espace annulaire 21 débouche également à l'extérieure de l'appareil afin de permette une meilleure évacuation de la chaleur.

En outre, du fait que, dans le présent mode de réalisation, la jupe 14 et le caquelon 2 sont séparables de la base 3, la paroi latérale 15 de la jupe 14 comprend, à sa surface intérieure, des plots qui sont en contact avec la paroi latérale 5 du caquelon 2 de façon à centrer (et à immobiliser) ce dernier dans le plan horizontal (dans le plan de la plaque de chauffe 13). Ces plots sont réalisés en une matière résistant à la chaleur (par exemple en un matériau plastique tel que de la bakélite).

La jupe 14 comprend également une paroi annulaire 23 qui est portée par la paroi latérale 15 (au niveau de son extrémité libre supérieure 24). Cette paroi annulaire 23 s'étend dans le plan horizontal vers l'intérieur du caquelon 2, au-delà de l'extrémité libre supérieure 16 de la paroi latérale 5 de ce dernier. Cette paroi annulaire 23 permet de compléter la protection de l'utilisateur contre d'éventuelles brûlures, et d'éviter que, entre autre, des aliments tombent dans l'espace annulaire 21.

Afin d'éviter toute surchauffe de la paroi annulaire 23 du fait de la présence proche du caquelon 2, l'appareil à fondue 1 est conformé de sorte qu'il existe un espace sensiblement torique 25 entre la paroi annulaire 23 et le caquelon 2. Cet espace torique 25 débouche à l'extérieur de l'appareil (en direction de l'intérieur du caquelon 2) et est relié à l'espace annulaire 21 afin de permette l'évacuation de la chaleur.

Par ailleurs, la paroi annulaire 23 comporte des moyens d'immobilisation 26 qui coopèrent avec des moyens complémentaires d'immobilisation 16 de façon à permettre l'immobilisation du caquelon 2 dans la direction verticale (perpendiculairement au plan de la plaque de chauffe 13) quand ce dernier est correctement placé sur la base 3 (ici, sur la plaque de chauffe 13) et la jupe 14 fixée à la base 3 (ici, au socle 6). Dans le présent mode de réalisation, les moyens d'immobilisation 26 sont formés par des entretoises 26 qui sont portées par la surface inférieure de la paroi annulaire 23 et qui viennent en contact avec l'extrémité libre supérieure 16 de la paroi latérale 5 du caquelon 2 formant les moyens complémentaires d'immobilisation 16. Ces entretoises 26 sont réalisées en une matière résistant à la chaleur (par exemple en un matériau plastique tel que de la bakélite). Après avoir correctement disposé le caquelon 2 sur la base 3, la jupe 14 est amenée autour du caquelon 2, l'immobilisant dans un premier temps dans le plan horizontal par l'intermédiaire des plots. La fixation de la jupe 14 à la base par l'encliquetage des crochets 18 dans les ouvertures 17 entraîne conjointement l'immobilisation verticale du caquelon 2 par intermédiaire des entretoises 26 qui prennent appui sur la paroi latérale 5 de ce dernier. Les entretoises 26 permettent également de définir l'espace torique 25.

En outre, la paroi annulaire 23 comporte une première série d'orifices 27 qui la traversent dans une zone située entre son extrémité libre interne 28 et l'extrémité libre supérieure 16 de la paroi latérale 5 du caquelon 2. Ces orifices 27 (ici, des fentes oblongues ouvertes 27, c'est à dire débouchant à l'extrémité libre interne 28 de la paroi annulaire 23) permettent de maintenir en place des pics dans le caquelon 2 pendant les opérations de cuisson.

La paroi annulaire 23 comporte également une seconde série d'orifices 29 qui la traversent dans une zone située entre l'extrémité libre supérieure 16 de la paroi latérale 5 du caquelon 2 et l'extrémité libre supérieure 24 de la paroi latérale 15 de la jupe 14. Ces orifices 29 (ici des ouvertures oblongues fermées 29) permettent de suspendre les pics dans l'espace annulaire 21 entre deux opérations de cuisson.

L'extrémité libre 16 des parois latérales 5 du caquelon et celle 24 des parois latérales 15 de la jupe 14 (ici, de façon plus précise, l'extrémité libre interne 28 de la paroi annulaire 23 de la jupe 14) définissent l'ouverture supérieure de l'appareil à fondue permettant la manipulation des aliments en cours de cuisson.

La présente invention n'est pas limitée au mode de réalisation présenté en détail.
Les moyens et les moyens complémentaires de verrouillage pourraient être différents, ils pourraient ne pas être sollicités dans l'une ou l'autre de leur position,
Les moyens de déverrouillage pourraient être différents, et ils pourraient, notamment, ne pas être solidaires des moyens ou des moyens complémentaires de verrouillage,
La jupe pourrait ne pas avoir de plots de centrage, cette fonctionnalité pouvant être soit absente, soit réalisée par d'autres moyens, par exemple par la forme de la plaque de chauffe sur laquelle repose le caquelon,
La paroi annulaire pourrait ne pas avoir d'entretoises d'immobilisation, et/ou d'orifices (tant pour le maintien en place des pics pendant les opérations de cuisson que pour leur suspension entre deux opérations de cuisson), et les orifices de maintien en place pourraient être des orifices fermés.

En outre, l'appareil de cuisson pourrait ne pas être un appareil à fondue, mais tout autre appareil de cuisson comprenant une ouverture permettant la manipulation des aliments en cours de cuisson (c'est-à-dire, des appareils de cuisson ne comprenant pas de couvercles articulés fermant plus ou moins hermétiquement le récipient de cuisson). Le récipient de cuisson est délimité par des parois latérales, celles si pouvant avoir une hauteur particulièrement faible auquel cas le récipient est alors une empreinte réalisée dans une plaque, tel que dans un crêpier. De plus, la paroi de fond du récipient de cuisson peut ne pas être pleine et comporter alors des orifices permettant, par exemple, l'évacuation de graisses de cuisson.

## Revendications

1. Appareil de cuisson (1) ayant une ouverture supérieure permettant la manipulation d'aliments en cours de cuisson, et comprenant une base (3), un récipient de cuisson (2) qui reçoit les aliments à cuire et qui repose sur la base (3), et une jupe (14) qui est amovible de la base (3) et qui comporte une paroi latérale (15) fermée ceinturant le récipient de cuisson (2) et s'étendant verticalement de la base (3) jusqu'au moins l'extrémité libre supérieure (16) de la paroi latérale (5) du récipient de cuisson (2), **caractérisé en ce que** le récipient de cuisson (2) est amovible de la base (3) et **en ce que** la paroi latérale (15) de la jupe (14), d'une part, comprend des moyens de verrouillage (17) qui sont adaptés à coopérer avec des moyens complémentaires de verrouillage (18) portés par la base (3) de façon à permettre la fixation libérable de la jupe (14) à la base (3), et, d'autre part, porte une paroi annulaire (23) comportant des moyens d'immobilisation (26) qui coopèrent avec des moyens complémentaires d'immobilisation (16) de façon à permettre l'immobilisation du récipient de cuisson (2) dans la direction verticale quand la jupe (14) est fixée à la base (3) et le récipient est correctement placé sur la base (3).

2. Appareil de cuisson (1) selon la revendication 1, **caractérisé en ce que** la paroi de fond (4) du récipient de cuisson (2) est une paroi pleine.

3. Appareil de cuisson (1) selon la revendication 2, **caractérisé en ce que** c'est un appareil à fondue (1) dont le caquelon (2) forme le récipient de cuisson (2).

4. Appareil de cuisson (1) selon l'une des revendications 1 à 3, **caractérisé en ce que** les moyens de verrouillage (17) sont formés par des ouvertures (17) adaptées à recevoir des crochets (18) qui forment les moyens complémentaires de verrouillage (18).

5. Appareil de cuisson (1) selon l'une des revendications 1 à 4, **caractérisé en ce que** la base (3) comprend des moyens de déverrouillage (20) permettant d'entraîner les moyens complémentaires de verrouillage (18) dans leur position de libération.

6. Appareil de cuisson (1) selon la revendication 5 dépendante de la revendication 4, **caractérisé en ce que** les moyens de déverrouillage (20) sont formés par la surface extérieure (20) des crochets (18) traversant les ouvertures (17).

7. Appareil de cuisson (1) selon l'une des revendications 1 à 6, **caractérisé en ce que** la paroi latérale (15) de la jupe (14) comprend des plots venant en contact avec la paroi latérale (5) du récipient (2) de façon à centrer ce dernier dans le plan horizontal et à définir un espace sensiblement annulaire (21) entre la paroi latérale (5) du récipient (2) et celle (15) de la jupe (14).

8. Appareil de cuisson (1) selon l'une des revendications 1 à 7, **caractérisé en ce que** la paroi annulaire (23) est portée par la paroi latérale (15) au niveau de son extrémité libre supérieure (24), et s'étend, dans le plan horizontal, vers l'intérieur du récipient (2), au-delà de l'extrémité libre supérieure (16) de la paroi latérale (5) de ce dernier (2).

9. Appareil de cuisson (1) selon la revendication 8, dépendante de la revendication 7, **caractérisé en ce que** les moyens d'immobilisation (26) sont formés par des entretoises (26) venant en contact avec l'extrémité libre supérieure (16) de la paroi latérale (5) du récipient (2) de façon à immobiliser ce dernier dans la direction verticale et à définir un espace sensiblement torique (25) en liaison avec l'espace annulaire (21).

10. Appareil de cuisson (1) selon l'une des revendication 8 ou 9, **caractérisé en ce que** la paroi annulaire (23) comporte une première série d'orifices (27) la traversant dans une zone située entre son extrémité libre interne (28) et l'extrémité libre supérieure (16) de la paroi latérale (5) du récipient (2).

11. Appareil à fondue (1) selon l'une des revendications 8 à 10, **caractérisé en ce que** la paroi annulaire (23) comporte une seconde série d'orifices (29) la traversant dans une zone située entre l'extrémité libre supérieure (24) de la paroi latérale (15) de la jupe (14) et celle (16) de la paroi latérale (5) du récipient (2).

## Claims

1. Cooking appliance (1) having an upper opening for manipulating food during cooking, and comprising a base (3), a cooking vessel (2) which holds the food to be cooked and which rests on the base (3), and a skirt (14) which can be removed from the base (3) and which has a closed side wall (15) surrounding the cooking vessel (2) and extending vertically from the base (3) at least as far as the upper free end (16) of the side wall (5) of the cooking vessel (2), **characterized in that** the cooking vessel (2) can be removed from the base (3) and **in that** the side wall (15) of the skirt (14), on the one hand, comprises locking means (17) appropriate for engaging with complementary locking means (18) on the base (3) for detachably fixing the skirt (14) to the base (3), and, on the other hand, supports an annular wall (23) having immobilizing means (26) that engage with complementary immobilizing means (16) for immobilizing the cooking vessel (2) in the vertical direction when the skirt (14) is fixed to the base (3) and the vessel is placed correctly on the base (3) .

2. Cooking appliance (1) according to Claim 1, **characterized in that** the bottom wall (4) of the cooking vessel (2) is a solid wall.

3. Cooking appliance (1) according to Claim 2, **characterized in that** it is a fondue appliance (1) of which the caquelon (2) forms the cooking vessel (2).

4. Cooking appliance (1) according to one of Claims 1 to 3, **characterized in that** the locking means (17) are formed by openings (17) appropriate for holding hooks (18) which form the complementary locking means (18).

5. Cooking appliance (1) according to one of Claims 1 to 4, **characterized in that** the base (3) comprises unlocking means (20) for guiding the complementary locking means (18) into their release position.

6. Cooking appliance (1) according to Claim 5, when dependent on Claim 4, **characterized in that** the unlocking means (20) are formed by the outer surface (20) of the hooks (18) passing through the openings (17).

7. Cooking appliance (1) according to one of Claims 1 to 6, **characterized in that** the side wall (15) of the skirt (14) comprises protrusions that come into contact with the side wall (5) of the vessel (2) in order to centre the latter in the horizontal plane and to define an approximately annular space (21) between the side wall (5) of the vessel (2) and that (15) of the skirt (14).

8. Cooking appliance (1) according to one of Claims 1 to 7, **characterized in that** the annular wall (23) is supported by the side wall (15) at its upper free end (24) and extends, in the horizontal plane, towards the inside of the vessel (2), beyond the upper free end (16) of the side wall (5) of the latter (2).

9. Cooking appliance (1) according to Claim 8, when dependent on Claim 7, **characterized in that** the immobilizing means (26) are formed by spacers (26) that come into contact with the upper free end (16) of the side wall (5) of the vessel (2) in order to immobilize the latter in the vertical direction and to define an approximately toroidal space (25) connected to the annular space (21).

10. Cooking appliance (1) according to either of Claims 8 and 9, **characterized in that** the annular wall (23) has a first set of orifices (27) passing through it in a region located between its inner free end (28) and the upper free end (16) of the side wall (5) of the vessel (2).

11. Fondue appliance (1) according to one of Claims 8 to 10, **characterized in that** the annular wall (23) has a second set of orifices (29) passing through it in a region located between the upper free end (24) of the side wall (15) of the skirt (14) and that (16) of the side wall (5) of the vessel (2).

## Patentansprüche

1. Gargerät (1) mit einer oberen Öffnung, welche die Handhabung von Nahrungsmitteln während des Garens ermöglicht, und mit einem Sockel (3), einem Garbehälter (2), welcher die zu garenden Nahrungsmittel aufnimmt und auf dem Sockel (3) aufliegt, einem Mantel (14), der von dem Sockel (3) abnehmbar ist und eine geschlossene Seitenwand (15) aufweist, die den Garbehälter (2) umschließt und sich senkrecht von dem Sockel (3) zumindest bis zum freien oberen Rand (16) der Seitenwand (5) des Garbehälters (2) erstreckt, **dadurch gekennzeichnet, dass** der Garbehälter (2) von dem Sockel (3) abnehmbar ist und dass die Seitenwand (15) des Mantels (14) einerseits Verriegelungsmittel (17) aufweist, die dazu ausgelegt sind, mit von dem Sockel (3) getragenen komplementären Verriegelungsmitteln (18) so zusammenzuwirken, dass sie die lösbare Befestigung des Mantels (14) an den Sockel (3) ermöglichen, und andererseits eine ringförmige Wand (23) trägt, die Festlegemittel (26) aufweist, welche mit komplementären Festlegemitteln (16) so zusammenwirken, dass sie das Festlegen des Garbehälters (2) in senkrechter Richtung dann ermöglichen, wenn der Mantel (14) am Sockel (3) befestigt und der Behälter korrekt am Sockel (3) platziert ist.

2. Gargerät (1) nach Anspruch 1, **dadurch gekennzeichnet, dass** die Bodenwand (4) des Garbehälters (2) eine Vollwand ist.

3. Gargerät (1) nach Anspruch 2, **dadurch gekennzeichnet, dass** es sich um ein Fondue-Gerät (1) handelt, dessen Caquelon (2) den Garbehälter (2) bildet.

4. Gargerät (1) nach einem der Ansprüche 1 bis 3, **dadurch gekennzeichnet, dass** die Verriegelungsmittel (17) aus Öffnungen (17) gebildet sind, die dazu ausgelegt sind, Haken (18) aufzunehmen, welche die komplementären Verriegelungsmittel (18) bilden.

5. Gargerät (1) nach einem der Ansprüche 1 bis 4, **dadurch gekennzeichnet, dass** der Sockel (3) Entriegelungsmittel (20) aufweist, mit denen die komplementären Verriegelungsmittel (18) in ihre Freigabestellung gebracht werden können.

6. Gargerät (1) nach Anspruch 5 in Abhängigkeit von Anspruch 4, **dadurch gekennzeichnet, dass** die Entriegelungsmittel (20) aus der Außenseite (20) der durch die Öffnungen (17) tretenden Haken (18) gebildet sind.

7. Gargerät (1) nach einem der Ansprüche 1 bis 6, **dadurch gekennzeichnet, dass** die Seitenwand (15) des Mantels (14) Zapfen aufweist, die mit der Seitenwand (5) des Behälters (2) in Kontakt gelangen, so dass letzterer in der horizontalen Ebene zentriert wird und dass zwischen der Seitenwand (5) des Behälters (2) und der (15) des Mantels (14) ein im wesentlichen ringförmiger Freiraum (21) definiert wird.

8. Gargerät (1) nach einem der Ansprüche 1 bis 7, **dadurch gekennzeichnet, dass** die ringförmige Wand (23) im Bereich ihres freien oberen Randes (24) von der Seitenwand (15) getragen wird und sich in der horizontalen Ebene zum Inneren des Behälters (2) hin über den freien oberen Rand (16) der Seitenwand (5) des letztgenannten (2) hinaus erstreckt.

9. Gargerät (1) nach Anspruch 8 in Abhängigkeit von Anspruch 7, **dadurch gekennzeichnet, dass** die Festlegemittel (26) aus Stegen (26) gebildet sind, die mit dem freien oberen Rand (16) der Seitenwand (5) des Behälters (2) in Kontakt gelangen, so dass letzterer in vertikaler Richtung festgelegt wird und ein im wesentlichen torischer Freiraum (25) in Verbindung mit dem ringförmigen Freiraum (21) definiert wird.

10. Gargerät (1) nach einem der Ansprüche 8 oder 9, **dadurch gekennzeichnet, dass** die ringförmige Wand (23) eine erste Reihe von Aussparungen (27) aufweist, welche sich durch diese in einem Bereich zwischen ihrem freien inneren Rand (28) und dem freien oberen Rand (16) der Seitenwand (5) des Behälters (2) erstrecken.

11. Fondue-Gerät (1) nach einem der Ansprüche 8 bis 10, **dadurch gekennzeichnet, dass** die ringförmige Wand (23) eine zweite Reihe von Aussparungen (29) aufweist, welche sich durch diese in einem Bereich zwischen dem freien oberen Rand (24) der Seitenwand (15) des Mantels (14) und dem (16) der Seitenwand (5) des Behälters (2) erstrecken.
